# EUROPEAN PATENT APPLICATION

(11) **EP 4 845 191 A1**
(43) Date of publication of application: **25.11.2026**
(21) Application number: 24917694.2
(22) Date of filing: 17.01.2024
(51) Int. Cl.: H04W 8/20

(54) **WIRELESS COMMUNICATION METHOD, TERMINAL DEVICE AND CORE NETWORK DEVICE**

(71) Applicant: GUANGDONG OPPO MOBILE TELECOMMUNICATIONS CORP., LTD., Dongguan, Guangdong 523860 (CN)
(72) Inventor: WANG, Yaxin, Dongguan, Guangdong 523860 (CN)
(74) Representative: RGTH
(86) International application number: PCT/CN2024/072777
(87) International publication number: WO 2025/152068

(57) **Abstract**

Provided are a wireless communication method, a terminal device, and a core network device. The method comprises: the terminal device sends first information to a first core network device, wherein the first information is used for determining a first access mode and a second access mode for multi-access communication of the terminal device. In the embodiments of the present application, the terminal device can send the first information to the first core network device, so that the first core network device determines, on the basis of the first information, the first access mode and the second access mode related to multi-access communication, thereby improving the rationality of the network device performing multi-access communication related configuration on the terminal device.

## Description

### TECHNICAL FIELD

This application relates to the field of communications technologies, and more specifically, to a wireless communication method, a terminal device, and a core network device.

### BACKGROUND

In multi-access communication, introduction of an access traffic steering, switching, and splitting (access traffic steering, switching, splitting, ATSSS) technology may support simultaneous access to 3rd Generation Partnership Project (3rd Generation Partnership Project, 3GPP) access technologies and non-3GPP access technologies (for example, wireless fidelity (wireless fidelity, Wi-Fi)), and traffic steering, switching, and splitting between them. With technological advancements, other types of multi-access communication technologies have been introduced, such as multi-access communication performed based on different types of 3GPP access. However, how to implement other types of multi-access communication technologies has not yet been specified.

### SUMMARY

This application provides a wireless communication method, a terminal device, and a core network device. Various aspects of this application are described below.

According to a first aspect, a wireless communication method is provided, and includes: transmitting, by a terminal device, first information to a first core network device, where the first information is used to determine that a first access type and a second access type are used for multi-access communication of the terminal device.

According to a second aspect, a wireless communication method is provided, and includes: receiving, by a first core network device, first information transmitted by a terminal device, where the first information is used to determine that a first access type and a second access type are used for multi-access communication of the terminal device.

According to a third aspect, a wireless communication method is provided, and includes: receiving, by a second core network device, third information transmitted by a first core network device, where the third information is used to determine that a first access type and a second access type are used for multi-access communication of a terminal device.

According to a fourth aspect, a terminal device is provided, and includes: a transmitting unit, configured to transmit first information to a first core network device, where the first information is used to determine that a first access type and a second access type are used for multi-access communication of the terminal device.

According to a fifth aspect, a core network device is provided. The core network device is a first core network device, and includes: a receiving unit, configured to receive first information transmitted by a terminal device, where the first information is used to determine that a first access type and a second access type are used for multi-access communication of the terminal device.

According to a sixth aspect, a core network device is provided. The core network device is a second core network device, and includes: a receiving unit, configured to receive third information transmitted by a first core network device, where the third information is used to determine that a first access type and a second access type are used for multi-access communication of a terminal device.

According to a seventh aspect, a terminal device is provided, and includes a processor, a memory, and a communications interface. The memory is configured to store one or more computer programs. The processor is configured to invoke the computer program in the memory, to cause the terminal device to execute some or all of the steps in the method according to the first aspect.

According to an eighth aspect, a core network device is provided, and includes a processor, a memory, and a transceiver. The memory is configured to store one or more computer programs, and the processor is configured to invoke the computer program in the memory to cause the network device to execute some or all of the steps in the method according to the second aspect or the third aspect.

According to a ninth aspect, an embodiment of this application provides a communications system, where the system includes the foregoing terminal device and/or core network device. In another possible design, the system may further include another device that interacts with the terminal device or the core network device in solutions provided in embodiments of this application.

According to a tenth aspect, an embodiment of this application provides a computer-readable storage medium, where the computer-readable storage medium stores a computer program, and the computer program causes a communications device (for example, a terminal device or a core network device) to execute some or all of steps in the method according to each of the foregoing aspects.

According to an eleventh aspect, an embodiment of this application provides a computer program product, where the computer program product includes a non-transitory computer-readable storage medium that stores a computer program, and the computer program is operable to cause a communications device (for example, a terminal device or a core network device) to execute some or all of steps in the method according to each of the foregoing aspects. In some implementations, the computer program product may be a software installation package.

According to a twelfth aspect, an embodiment of this application provides a chip. The chip includes a memory and a processor, and the processor may invoke and run a computer program in the memory, to implement some or all of the steps of the methods according to the foregoing aspects.

In embodiments of this application, a terminal device may transmit first information to a first core network device, so that the first core network device determines, based on the first information, a first access type and a second access type involved in multi-access communication, which is conducive to improving rationality of the network device in performing configuration related to multi-access communication for the terminal device.

### BRIEF DESCRIPTION OF DRAWINGS

FIG. 1 is a schematic diagram of a wireless communications system to which embodiments of this application are applicable.
FIG. 2 is a schematic diagram of a communication architecture to which an ATSSS technology is applicable.
FIG. 3 is a schematic diagram of a procedure of establishing an MA PDU session to which an embodiment of this application is applicable.
FIG. 4 is a schematic diagram of another procedure of establishing an MA PDU session to which an embodiment of this application is applicable.
FIG. 5 is a schematic diagram of a wireless communication method according to an embodiment of this application.
FIG. 6 to FIG. 9 are schematic diagrams of a wireless communication method according to an embodiment of this application.
FIG. 10 is a schematic diagram of a terminal device according to an embodiment of this application.
FIG. 11 is a schematic diagram of a core network device according to an embodiment of this application.
FIG. 12 is a schematic diagram of a core network device according to an embodiment of this application.
FIG. 13 is a schematic diagram of a structure of a communications apparatus according to an embodiment of this application.

### DESCRIPTION OF EMBODIMENTS

Technical solutions in this application are described below with reference to the accompanying drawings.

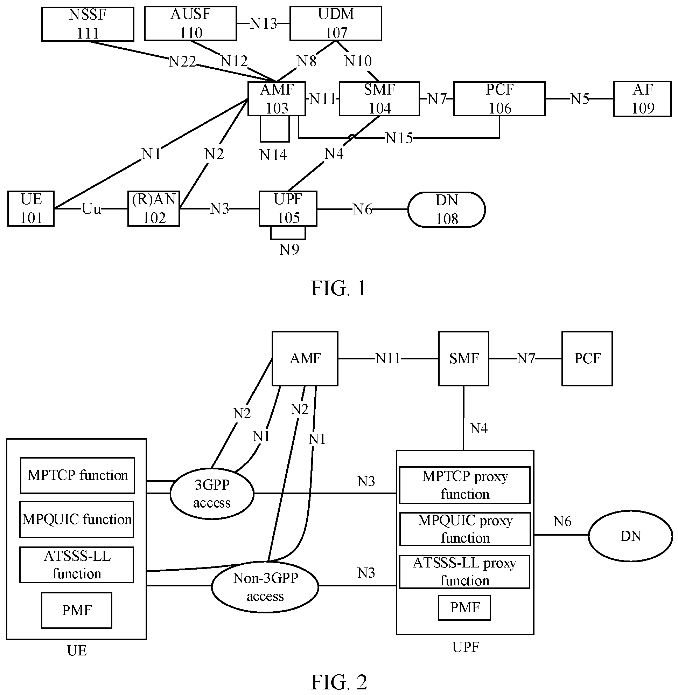

FIG. 1 is a schematic diagram of a wireless communications system to which embodiments of this application are applicable. As shown in FIG. 1, a 5th generation (5th generation, 5G) system or new radio (new radio, NR) network architecture released by the 3GPP standard organization includes: a terminal device (also referred to as "user equipment (user equipment, UE)" 101), an access network device 102 (including a radio access network (radio access network, RAN) or an access network (access network, AN)) that supports 3GPP technologies, a user plane function (user plane function, UPF) network element 105, an access and mobility management function (access and mobility management function, AMF) network element 103, a session management function (session management function, SMF) network element 104, a policy control function (policy control function, PCF) network element 106, an application function (application function, AF) network element 109, a data network (data network, DN) 108, a network slice selection function (Network Slice Selection Function, NSSF) 111, an authentication server function (Authentication Server Function, AUSF) 110, and a unified data management function (Unified Data Management, UDM) 107.

It should be noted that the network architecture shown in FIG. 1 does not constitute a limitation on the 5G network architecture. In specific implementation, the 5G network architecture may include more or fewer network elements than those shown in the figure, or some network elements may be combined, or the like. In addition, in FIG. 1, an AN or a RAN is represented in a manner of (R)AN.

The terminal device 101 may be a user equipment (user equipment, UE), a terminal, a handheld terminal, a notebook computer, a subscriber unit (subscriber unit), a cellular phone (cellular phone), a smart phone (smart phone), a wireless data card, a personal digital assistant (personal digital assistant, PDA) computer, a tablet computer, a wireless modem (modem), a handheld device (handheld), a laptop computer (laptop computer), a cordless phone (cordless phone), or a wireless local loop (wireless local loop, WLL) station, a machine-type communication (machine type communication, MTC) terminal, a handheld device having a wireless communication function, a computing device, a processing device connected to a wireless modem, an unmanned aerial vehicle, a vehicle-mounted device, a wearable device, a terminal in an internet of things, a virtual reality device, a terminal device in a future communications system (for example, 6G) network, a terminal in a future evolved public land mobile network (public land mobile network, PLMN), or the like.

The access network device 102 is an access device for a terminal device to access the network architecture in a wireless manner, and is mainly responsible for radio resource management, quality of service (quality of service, QoS) management, data compression and encryption, and the like on an air interface side, for example, a base station NodeB, an evolved base station eNodeB, a base station in a 5G mobile communications system or a new radio (new radio, NR) communications system, or a base station in a future mobile communications system.

The UPF network element 105, the AMF network element 103, the SMF network element 104, and the PCF network element 106 are network elements of a 3GPP core network (referred to as core network elements). The UPF network element 105 may be referred to as a user plane function network element, and is mainly responsible for user data transmission. Another network element may be referred to as a control plane function network element, and is mainly responsible for certification, authentication, registration management, session management, mobility management, policy control, and the like, so as to ensure reliable and stable transmission of user data.

The UPF network element 105 (or "PCF" for short) may be configured to forward and receive data of a terminal. For example, the UPF network element may receive data of a service from a data network, and transmit the data to the terminal by using an access network device. The UPF network element may further receive user data from the terminal by using the access network device, and forward the user data to the data network. The transmission resources allocated and scheduled by the UPF network element to the terminal are managed and controlled by the SMF network element. Bearers between the terminal and the UPF network element may include: a user plane connection between the UPF network element and the access network device, and a channel established between the access network device and the terminal. The user plane connection is a quality of service (quality of service, QoS) flow (flow) that may be established between the UPF network element and the access network device for data transmission.

The AMF network element 103 (or "AMF" for short) may be used to manage access of a terminal to a core network, such as location update, network registration, and access control of a terminal, mobility management of a terminal, attachment and detachment of a terminal, and the like. In a case of providing a service for a session of the terminal, the AMF network element may further provide storage resources of a control plane for the session, so as to store a session identifier, an SMF network element identifier associated with the session identifier, and the like.

The SMF network element 104 (or "SMF" for short) may be configured to: select a user plane network element for a terminal, redirect a user plane network element for the terminal, allocate an internet protocol (internet protocol, IP) address to the terminal, establish a bearer (also referred to as a session) between the terminal and the UPF network element, modify and release a session, and control QoS.

The PCF network element 106 (or "PCF" for short) is configured to provide a policy, for example, a QoS policy or a slice selection policy, to the AMF network element 103 and the SMF network element 104.

The AF network element 109 (or "AF" for short) is configured to interact with a network element in the 3GPP core network to support routing of application-driven data, access network exposure functions, interactions with the PCF network element for policy control, and the like.

The DN 108 may provide a data service for a user in an IP multi-media service (IP multi-media service, IMS) network, the Internet, or the like. The DN 108 may include a plurality of application servers (application server, AS), providing different application services, such as an operator service, internet access, or a third-party service. The AS may implement a function of an AF network element.

The NSSF 111 is configured to select a network slice and supports the following functions: selecting a set of network slice instances that serve UE; determining allowed network slice selection assistance information (network slice selection assistance information, NSSAI), and when required, determining a mapping to subscribed single-network slice selection assistance information (single-network slice selection assistance information, S-NSSAI); determining configured NSSAI, and when required, determining a mapping to subscribed S-NSSAI; and determining a set of AMFs that may be used to query a UE, or determining a list of candidate AMFs based on a configuration.

The AUSF 110 is configured to: receive an identity authentication request from the AMF 103 for the terminal, request a key from the UDM 107, and then forward the delivered key to the AMF 103 for authentication processing.

The UDM 107 includes functions such as generation and storage of user subscription data and management of authentication data, and supports interaction with an external third-party server.

It should be understood that each network element in FIG. 1 may be a network element in a hardware device, a software function running on dedicated hardware, or a virtualized function instantiated on a platform (for example, a cloud platform). It should be noted that in the network architecture shown in the foregoing figure, network elements included in the entire network architecture are merely described as examples. The network elements included in the entire network architecture are not limited in embodiments of this application.

### ATSSS

In some scenarios, to fully utilize network resources of non-3GPP access networks (for example, wireless fidelity (wireless fidelity, Wi-Fi)), a non-3GPP access network and a 3GPP access network may be configured to cooperate with each other, to achieve flexible splitting and switching of data traffic between the two types of access networks. Accordingly, the ATSSS technology is introduced.

FIG. 2 is a schematic diagram of a communication architecture to which an ATSSS technology is applicable. Referring to FIG. 2, compared to a basic 5G system architecture (for example, the communication architecture shown in FIG. 1), an access type of non-3GPP access (non 3GPP access) is mainly added in addition to the 3GPP access (3GPP access) type, and both of the two access types coexist. In addition, there are corresponding ATSSS function modules respectively on a UE side and a UPF side, which are configured to perform measurement, switching, and spitting on transmitted traffic flows. The ATSSS function module on the UE side includes: an MPTCP function, an MPQUIC function, an ATSSS-LL function, and a PMF. The ATSSS function module on the UPF side includes: an MPTCP proxy function, an MPQUIC proxy function, an ATSSS-LL proxy function, and a PMF.

In some implementations, the non-3GPP access network and the 3GPP access network may use the same UPF, so that the UPF may communicate with external DNs as a data aggregation point.

### Session establishment procedure

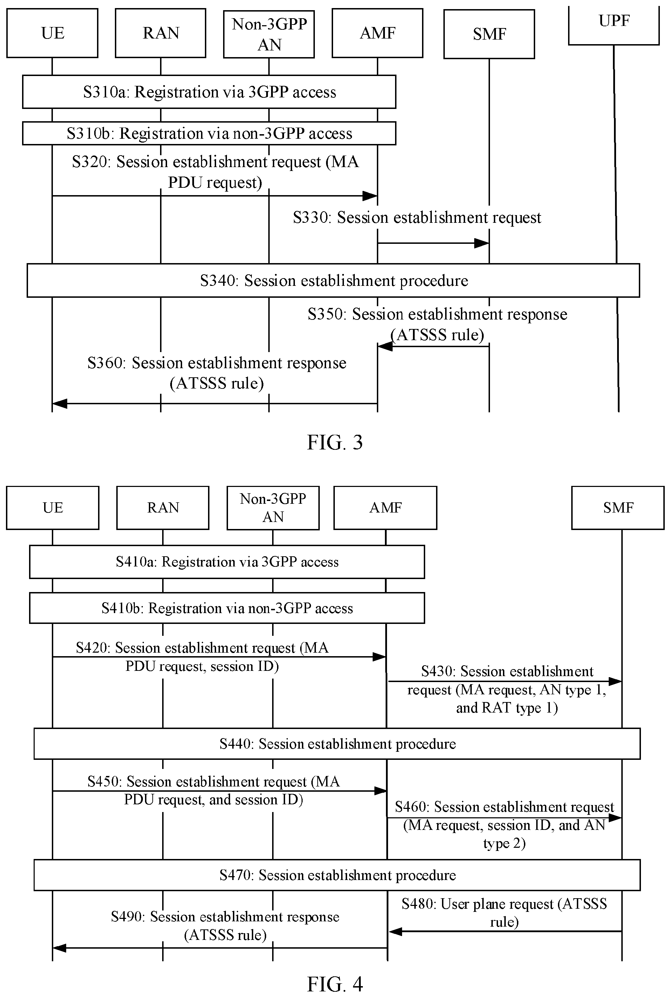

To support establishment of an ATSSS architecture, a UE is required to establish a multi-access protocol data unit session (multi-access protocol data unit session, MA PDU session). FIG. 3 and FIG. 4 respectively illustrate two procedures of establishing an MA PDU session.

FIG. 3 is a schematic diagram of a procedure of establishing an MA PDU session to which an embodiment of this application is applicable. During this procedure, a UE may register with two access networks simultaneously, and transmit a session establishment request by using only one of the access types. The method illustrated in FIG. 3 includes steps S310 to S360.

In steps S310a and S310b, the UE performs registration via both 3GPP access and non-3GPP access, where network elements for registration management are a same AMF.

In step S320, the UE transmits a session establishment request to the AMF, where the session establishment request includes a request indication for an MA PDU, which is used to request establishment of an MA PDU session.

In step S330, the AMF transmits a session establishment request to an SMF. The session establishment request may include a request indication for an MA PDU, a type of an access network (for example, 3GPP or non-3GPP) currently used by the UE to transmit the session establishment request, an access technology RAT (for example, NR, LTE, Wi-Fi, or the like) of the current access network, and information about an additional access network type (for example, 3GPP or non-3GPP).

In step S340, a session establishment procedure is performed. The procedure may include configuration of an N3 tunnel, configuration of a UPF, and the like.

It should be noted that, the procedure may include subsequent steps S350 and S360.

In step S350, the SMF transmits a session establishment response to the AMF. The session establishment response includes an ATSSS rule (rule), where the ATSSS rule is used to indicate a splitting rule for 3GPP access and non-3GPP access. For example, the splitting rule may be used to indicate that data to be transmitted via 3GPP access accounts for 70% of a total amount of data, and data to be transmitted via non-3GPP access accounts for 30% of the total amount of data.

In step S360, the AMF configures the ATSSS rule for the UE by using an NAS message.

FIG. 4 is a schematic diagram of another procedure of establishing an MA PDU session to which an embodiment of this application is applicable. During this procedure, the UE may register with two access networks simultaneously, and transmit a session establishment request by using each of the two access types. The method illustrated in FIG. 4 includes steps S410 to S460.

In steps S410a and S410b, the UE performs registration via both 3GPP access and non-3GPP access, where network elements for registration management are a same AMF.

It should be understood that different PLMNs may be respectively used for 3GPP access and non-3GPP access. In addition, registration processes corresponding to the 3GPP access and the non-3GPP access may not be performed simultaneously. For example, the UE may first perform registration via 3GPP access, and after establishing an MA PDU session by performing steps S410a to S440, the UE may then perform registration via the other access, trigger a session establishment request, and configure resources on the other access.

In step S420, the UE transmits a session establishment request to the AMF via Access 1. The session establishment request includes a request indication for an MA PDU and a session identifier (session ID), which are used to request establishment of an MA PDU session.

In step S430, the AMF transmits a session establishment request to an SMF. The session establishment request includes a request indication for an MA PDU, a type of an access network (for example, 3GPP or non-3GPP) currently used by the UE to transmit the session establishment request, and an access technology RAT (for example, NR, LTE, Wi-Fi, or the like) of the current access network.

In step S440, a session establishment procedure is performed. The procedure includes configuration of an N3 tunnel, configuration of a UPF, and the like.

In step S450, the UE transmits a session establishment request via Access 2. The session establishment request includes the session ID corresponding to the MA PDU session established via Access 1.

In step S460, the AMF transmits a session establishment request to the SMF. This session establishment request includes a request indication for an MA PDU and an access network type (for example, an access network type corresponding to Access 2) for the MA PDU session.

In some scenarios, the request may be a session modification request.

In step S470, a session establishment and configuration procedure is performed to configure user plane resources and the like corresponding to Access 2.

In step S480, the SMF transmits a session establishment response to the AMF. The session establishment response includes an ATSSS rule (rule), where the ATSSS rule is used to indicate a splitting rule for 3GPP access and non-3GPP access. For example, the splitting rule may be used to indicate that data to be transmitted via 3GPP access accounts for 70% of a total amount of data, and data to be transmitted via non-3GPP access accounts for 30% of the total amount of data.

In step S490, the AMF configures the ATSSS rule for the UE by using an NAS message.

As described above, conventional multi-access communication is performed based on non-3GPP access and 3GPP access. Accordingly, the introduced ATSSS technology is also implemented for this type of multi-access communication. With technological advancements, other types of multi-access communication technologies have been introduced, such as multi-access communication performed based on different types of 3GPP access. However, how to implement other types of multi-access communication technologies has not yet been specified.

The applicant has found that after other types of multi-access communication are introduced, a network device is unable to determine a type of a multi-access communication technology required by a terminal device, and therefore is unable to perform proper configuration for the terminal device, which causes the other types of multi-access communication technologies to be unable to be implemented.

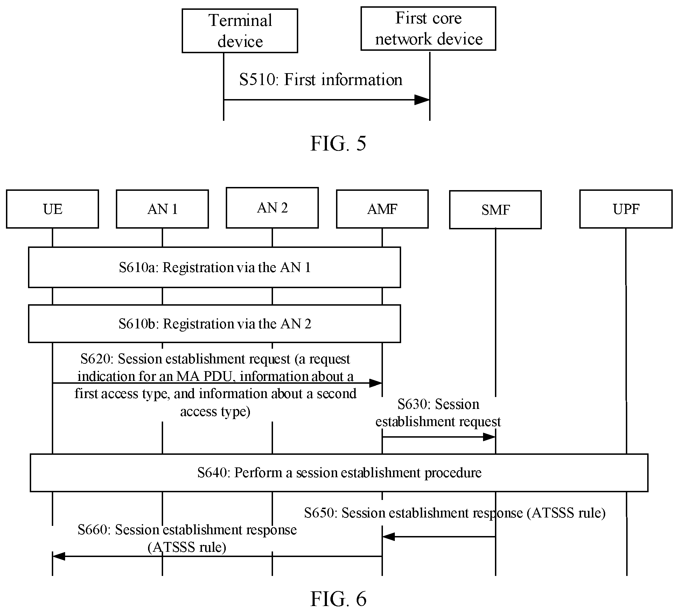

Therefore, for the foregoing problem, an embodiment of this application provides a wireless communication method. In this method, a terminal device may transmit first information to a first core network device, so that the first core network device determines, based on the first information, a first access type and a second access type involved in multi-access communication, which is conducive to improving rationality of the network device in performing configuration related to multi-access communication for the terminal device. The following describes a wireless communication method according to an embodiment of this application with reference to FIG. 5.

In step S510, a terminal device transmits first information to a first core network device, where the first information is used to determine that a first access type and a second access type are used for multi-access communication of the terminal device.

In some implementations, the first core network device may be an AMF. Certainly, in embodiments of this application, the first core network device may alternatively be another core network device having functions similar to that of an AMF in a future communications system.

In embodiments of this application, access types involved in the multi-access communication described above are not limited. In some implementations, the access types involved in the multi-access communication include a 3GPP access type and a non-3GPP access type. In some other implementations, the access types involved in the multi-access communication include different 3GPP access types. For example, the different 3GPP access types may include an access type based on a 4G network and an access type based on a 5G network. Certainly, in embodiments of this application, the access types involved in the multi-access communication may include 5G access types for different PLMNs, or may include access types for a plurality of different terminal devices, or may include access types for a plurality of different subscription permanent identifiers (subscription permanent identifier, SUPI).

In some implementations, the first information carries one or more of the following: identity information of the terminal device; information about the first access type; or information about the second access type. In some scenarios, one or more of the identity information of the terminal device, the information about the first access type, or the information about the second access type may be collectively referred to as "association information".

In some implementations, the association information described above may be used to indicate that the first access type and the second access type are associated with each other.

In embodiments of this application, the association information described above may explicitly indicate that the first access type and the second access type are associated with each other. For example, the association may occupy one bit. If a value of the bit is a first value, it indicates that the first access type and the second access type are associated with each other. Correspondingly, if the value of the bit is a second value, it indicates that the first access type and the second access type are not associated with each other. The first value is different from the second value. For example, the first value may be 0, and the second value may be 1. For another example, the first value may be 1, and the second value may be 0. Certainly, in embodiments of this application, the association information described above may implicitly indicate that the first access type and the second access type are associated with each other. In other words, if the association information includes the information about the first access type and the information about the second access type, it indicates that the first access type and the second access type are associated with each other.

In embodiments of this application, a combination of information included in the association information is not limited. For example, the association information may be a first UE ID (also referred to as a first terminal device identity) and a corresponding PDU session identifier ID, where the first UE ID may be a UE ID corresponding to the first access type. For another example, the association information may be an IP address of a first UE (the IP address of the first UE may be used to indicate a first UE ID and a corresponding PDU session identifier ID), where the IP address of the first UE may be an IP address of a UE corresponding to the first access type.

In some implementations, the AMF may transmit the information described above to the SMF, and the SMF may associate a session of the current second access type with a session of the first access type represented by the association information described above.

In some other implementations, the association information may further include one or more of the following: a first UE ID corresponding to the first access type, an association ID, or a user subscription ID. Correspondingly, the core network device (for example, the AMF) determines, based on the association information, a first UE ID corresponding to the first access type and a session of the first access type, and transmits information corresponding to the session, such as the first UE ID, a PDU session ID, and the like, to the SMF. Accordingly, the SMF may associate a session of the current second access type with the session of the first access type represented by the information described above.

For example, the first information carries the identity information of the terminal device. In some implementations, the identity information of the terminal device may include one or more of the following: a terminal device ID, a user subscription identifier corresponding to the terminal device, or an association identifier (correlation ID).

In some implementations, the terminal device ID may include an IP address of the terminal device.

In some scenarios, the terminal device may be configured with a plurality of universal subscriber identity modules (universal subscriber identity module, USIM), and the terminal device may execute different access types in multi-access communication by using different USIMs in a plurality of USIMs. For example, the terminal device may be equipped with a USIM 1 and a USIM 2. Accordingly, the first access type is executed by using the USIM 1 (in this case, an identifier of the USIM 1 may be understood as an identity of a terminal device corresponding to the first access type), and the second access type is executed by using the USIM 2 (in this case, an identifier of the USIM 2 may be understood as an identity of a terminal device corresponding to the second access type). In this case, the identity information of the terminal device described above may include the identifier of the USIM 1 and/or the identifier of the USIM 2. Alternatively, the identity information of the terminal device may include an association identifier. The association identifier is used to indicate that the USIM 1 and the USIM 2 are associated with each other.

For example, the terminal device that transmits the first information may be the USIM 1. Accordingly, an identity of a terminal device that is carried in the first information may be the USIM 2. In other words, a terminal device identified by the identity of the terminal device that is carried in the first information is associated with the terminal device that transmits the first information, or the terminal device identified by the identity of the terminal device that is carried in the first information and the terminal device that transmits the first information are configured to perform multi-access communication.

In embodiments of this application, a method of obtaining the association identifier is not limited. For example, the association identifier may be assigned to the terminal device by the core network device.

For example, the first information carries the information about the first access type. In this case, in some implementations, the information about the first access type may include one or more of the following: an identifier of a first access network; a type of an access network corresponding to the first access type; a terminal device identity corresponding to the first access type; or an RAT type corresponding to the first access type.

In some implementations, the identifier of the first access network may be a PLMN identifier.

In some implementations, the type of the access network corresponding to the first access type may include 3GPP access and non-3GPP access.

In some implementations, the RAT type corresponding to the first access type may include one or more of the following: satellite-based RAT, NR RAT, Wi-Fi RAT, or LTE RAT.

In some implementations, the terminal device identity corresponding to the first access type is used to identify an identity of a terminal device that executes the first access type. For example, the terminal device may be equipped with a USIM 1 and a USIM 2. Accordingly, the first access type is executed by using the USIM 1, and the second access type is executed by using the USIM 2. In this case, the terminal device identity corresponding to the first access type may be an identifier of the USIM 1.

For example, the first information carries the information about the second access type. In this case, in some implementations, the information about the second access type may include one or more of the following: an identifier of a second access network; a type of an access network corresponding to the second access type; a terminal device identity corresponding to the second access type; or an RAT type corresponding to the second access type.

In some implementations, the identifier of the second access network may be a PLMN identifier.

In some implementations, the type of the access network corresponding to the second access type may include 3GPP access and non-3GPP access.

In some implementations, the RAT type corresponding to the second access type may include one or more of the following: satellite-based RAT, NR RAT, Wi-Fi RAT, or LTE RAT.

In embodiments of this application, a relationship between the first access type and the second access type is not limited. For example, the first access type and the second access type may include two different access types in a scenario where different terminal devices respectively access different access networks. For another example, the first access type and the second access type may include two different access types in a scenario where different terminal devices access a same access network.

In some implementations, the terminal device identity corresponding to the second access type described above is used to identify an identity of a terminal device corresponding to the second access type. For example, the terminal device may be equipped with a USIM 1 and a USIM 2. Accordingly, the first access type is executed by using the USIM 1, and the second access type is executed by using the USIM 2. In this case, the terminal device identity corresponding to the second access type may be an identifier of the USIM 2.

In some implementations, the first information is carried in a first request, and the first request is used to request establishment or modification of a first session.

In some implementations, the first information carries a first indication, and the first indication is used to indicate that the first session is used for multi-access communication. Therefore, the first information may also be referred to as "multi-access indication information". In some other implementations, the multi-access communication is also referred to as "dual steer (dual steer) communication". This communication type aims to allow user traffic to be flexibly switched and/or split between a plurality of access types. Accordingly, the first information may also be referred to as "dual steer indication information".

As described above, the first session may be used for multi-access communication. Accordingly, the first session may also be referred to as a "multi-access session". For example, if the first session is a PDU session, the first session is also referred to as an "MA PDU session". Accordingly, the multi-access indication information is also referred to as an "MA PDU request indication".

In some implementations, the first information carries a session identifier of a second session, and the second session corresponds to the second access type. In this way, the first core network device may determine that the first session and the second session are associated with each other, or that the first session and the second session are used for multi-access communication.

In some scenarios, the first core network device transmits third information to a second core network device, to indicate, to the second core network device, that the first access type and the second access type are used for multi-access communication. In other words, the third information is used to indicate that the first access type and the second access type are used for multi-access communication of the terminal device.

In some implementations, the second core network device may be an SMF. Certainly, in embodiments of this application, the second core network device may alternatively be another core network device having functions similar to that of an SMF in a future communications system.

In embodiments of this application, content of the third information is not limited. In some implementations, the third information may be determined based on the first information. For example, content of the third information may be the same as content of the first information. In this case, it may be understood that after receiving the first information, the first core network device forwards the first information to the second core network device. For another example, the content of the third information is different from the content of the first information, but the content of the third information may be determined based on the first information.

In other words, the terminal device may report only the terminal device identity by using the first information. Accordingly, the AMF may determine the first access type based on the terminal device identity. In other words, if the first information carries the terminal device identity, the foregoing method further includes: determining, by the first core network device based on the terminal device identity, type information corresponding to the first access type, where the type information includes a type of an access network and/or an RAT type. The transmitting, by the first core network device, the third information to the second core network device includes: transmitting, by the first core network device, the third information to the second core network device, where the third information carries the type information corresponding to the first access type.

In some implementations, the foregoing method further includes: receiving, by the first core network device, response information that is for the third information and transmitted by the second core network device, where the response information for the third information is used to indicate a splitting rule corresponding to multi-access communication, and/or a switching rule corresponding to multi-access communication.

In some scenarios, the splitting rule and/or the switching rule may be used for multi-access communication. Therefore, the splitting rule and/or the switching rule may also be referred to as a "multi-access rule". In some other scenarios, the multi-access communication is also referred to as "dual steer (dual steer) communication." Accordingly, the multi-access rule may also be referred to as a dual steer rule.

In some implementations, the splitting rule is used to indicate a method of traffic splitting between the first access type and the second access type. For example, the splitting rule is used to indicate that data traffic to be transmitted by using the first access type accounts for 70% of total traffic, and data traffic to be transmitted by using the second access type accounts for 30% of the total traffic. The total traffic may be understood as the total volume of data traffic to be transmitted in the multi-access communication.

In some implementations, the switching rule is used to indicate a timing for traffic switching between the first access type and the second access type. For example, the switching rule is used to indicate a condition for switching (also referred to as a first condition). In other words, if the first condition is met, traffic is switched from the first access type to the second access type. Certainly, in embodiments of this application, if the first condition is met, traffic may be switched from the second access type to the first access type. The first condition in embodiments of this application is described below by using as an example in which traffic is switched from the first access type to the second access type.

In some implementations, the first condition is associated with a transmission delay of traffic in the first access type. In other words, if the transmission delay of traffic in the first access type is relatively large, traffic may be switched from the first access type to the second access type, which is conducive to reducing a delay required for transmitting traffic.

For example, if the transmission delay of traffic in the first access type is greater than or equal to a threshold, it may be understood as that the first condition is met, and in this case, the traffic may be switched from the first access type to the second access type. The threshold may be determined based on one or more of the following information: predefined information, pre-configured information, or configuration information from the network device. Certainly, in embodiments of this application, if the transmission delay of traffic in the first access type is a target value, it may be understood as that the first condition is met, and in this case, the traffic may be switched from the first access type to the second access type. The target value may be determined based on one or more of the following information: predefined information, pre-configured information, or configuration information from the network device.

In some implementations, the first condition is associated with the total volume of traffic transmitted in the first access type. In other words, if the total volume of traffic transmitted by using the first access type is relatively large, the traffic may be switched from the first access type to the second access type, which is conducive to avoiding a transmission failure caused by traffic transmission congestion.

For example, if the total volume of traffic transmitted by using the first access type is greater than or equal to a threshold 1, it may be understood as that the first condition is met, and in this case, the traffic may be switched from the first access type to the second access type. The threshold 1 may be determined based on one or more of the following information: predefined information, pre-configured information, or configuration information from the network device. Certainly, in embodiments of this application, if the total volume of traffic transmitted by using the first access type is a target value, it may be understood as that the first condition is met, and in this case, the traffic may be switched from the first access type to the second access type. The target value may be determined based on one or more of the following information: predefined information, pre-configured information, or configuration information from the network device.

For example, the threshold 1 is 4500 M. If the total volume of traffic transmitted by using the first access type is 5000 M, the total volume of traffic transmitted by using the first access type is greater than or equal to the threshold 1. In this case, the first condition is met, and the traffic may be switched from the first access type to the second access type.

In some implementations, the first condition is associated with a transmission rate of traffic in the first access type. In other words, if the transmission rate of traffic in the first access type is relatively small, the traffic may be switched from the first access type to the second access type, which is conducive to reducing a transmission delay traffic.

For example, if the transmission rate of traffic in the first access type is less than or equal to a threshold 2, it may be understood as that the first condition is met, and in this case, the traffic may be switched from the first access type to the second access type. A transmission rate of traffic in the second access type is greater than or equal to the threshold 2. Certainly, in embodiments of this application, if the transmission rate of traffic in the second access type is greater than the transmission rate of traffic in the first access type, it may be understood as that the first condition is met, and in this case, the traffic may be switched from the first access type to the second access type. Alternatively, if the transmission rate of traffic in the second access type is greater than the transmission rate of traffic in the first access type, and a difference between the transmission rate of traffic in the second access type and the transmission rate of traffic in the first access type is greater than or equal to the threshold 2, it may be understood as that the first condition is met, and in this case, the traffic may be switched from the first access type to the second access type.

The threshold 2 may be determined based on one or more of the following information: predefined information, pre-configured information, or configuration information from the network device.

For example, the threshold 2 is 50 Mbps. If the transmission rate of traffic in the second access type is greater than the transmission rate of traffic in the first access type, and a difference between the transmission rate of traffic in the second access type and the transmission rate of traffic in the first access type is 100 Mbps, the difference is greater than or equal to the threshold 2. In this case, the first condition is met, and the traffic may be switched from the first access type to the second access type.

In some implementations, the first condition is associated with a packet loss rate of traffic transmitted in the first access type. In other words, if the packet loss rate of traffic transmitted by using the first access type is relatively large, the traffic may be switched from the first access type to the second access type, which is conducive to increasing a success rate of traffic transmission.

For example, if the packet loss rate of traffic transmitted by using the first access type is greater than or equal to a threshold 3, it may be understood as that the first condition is met, and the traffic may be switched from the first access type to the second access type. The threshold 3 may be determined based on one or more of the following information: predefined information, pre-configured information, or configuration information from the network device. Certainly, in embodiments of this application, if the packet loss rate of traffic transmitted by using the first access type is a target value, it may be understood as that the first condition is met, and in this case, the traffic may be switched from the first access type to the second access type. The target value may be determined based on one or more of the following information: predefined information, pre-configured information, or configuration information from the network device.

In some implementations, the response information for the third information further includes the information about the first access type, and/or the information about the second access type. For the information about the first access type, and/or the information about the second access type, reference may be made to the foregoing description.

In some implementations, the foregoing method further includes: transmitting, by the first core network device, second information to the terminal device, where the second information is determined based on the response information for the third information.

In embodiments of this application, content of the second information is not limited. In some implementations, the second information being determined based on the response information for the third information may be understood as that the content of the second information is the same as content of the response information for the third information. In other words, after receiving the response information for the third information, the first core network device may forward the response information for the third information to the terminal device. Certainly, in embodiments of this application, the content of the second information may be different from the content of the response information for the third information, but the content of the second information is determined based on the response information for the third information. For example, the first core network device may process part of the content of the response information for the third information and transmit the processed content to the terminal device as a second device.

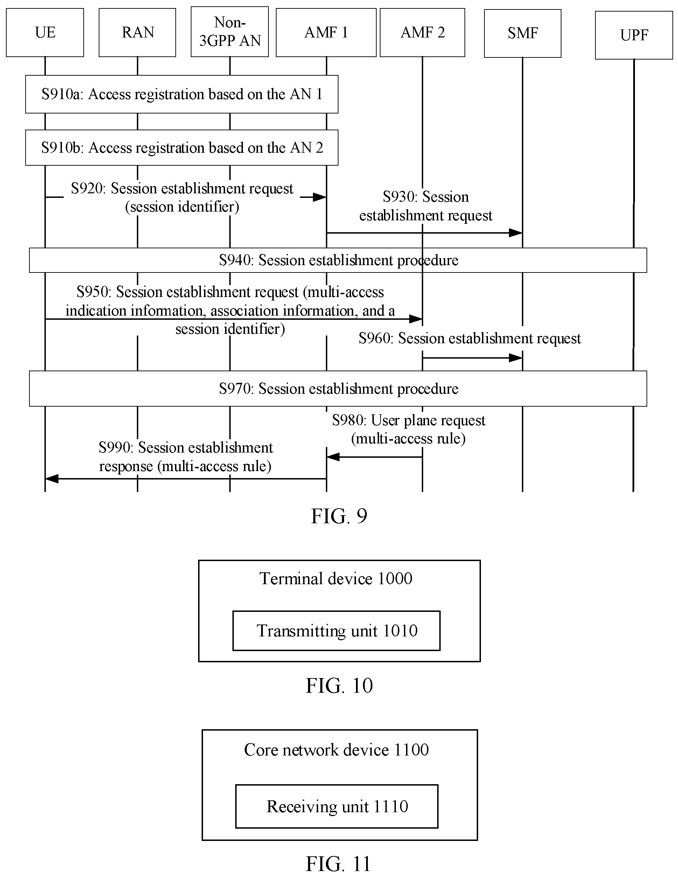

For ease of understanding, the wireless communication method in embodiments of this application is described below with reference to FIG. 6 and FIG. 9. It should be understood that the method in FIG. 6 to FIG. 9 is merely used to understand this application, and the protection range of this application is not limited thereto.

In the method illustrated in FIG. 6, it is assumed that the UE is already in a dual-registration state, that is, the UE has completed registration via the first access type and the second access type, where the first access type and the second access type are used for multi-access communication of the UE, with the first access type corresponding to an AN 1 and the second access type corresponding to an AN 2. The method illustrated in FIG. 6 includes steps S610 to S660.

In steps S610a and S610b, the UE performs registration via both the AN 1 and the AN 2, where network elements for registration management are a same AMF.

In step S620, the UE transmits a session establishment request to the AMF by using the AN 1.

In some implementations, the session establishment request includes a request indication for an MA PDU, information about the first access type, and information about the second access type. The request indication for the MA PDU is used to request establishment of an MA PDU session. The information about the first access type is used to indicate a type of an access network corresponding to the first access type and an RAT type corresponding to the first access type. The information about the second access type is used to indicate a type of an access network corresponding to the second access type and an RAT type corresponding to the second access type.

In step S630, the AMF transmits a session establishment request to an SMF. The session establishment request includes a request indication for an MA PDU, the information about the first access type, information about an additional access network type (that is, an access network type corresponding to the second access type), and an RAT type corresponding to the second access type.

In step S640, a session establishment procedure is performed. The procedure includes configuration of an N3 tunnel, configuration of a UPF, and the like.

In step S650, the SMF transmits a session establishment response to the AMF. The session establishment response includes an ATSSS rule. The ATSSS rule includes the information about the first access type, the information about the second access type, a splitting rule corresponding to multi-access communication, and a switching rule corresponding to multi-access communication.

The information about the first access type may include a type of an access network corresponding to the first access type and an RAT type corresponding to the first access type. The information about the second access type may include a type of an access network corresponding to the second access type and an RAT type corresponding to the second access type. The splitting rule is used to indicate that data traffic to be transmitted by using the first access type accounts for 70% of total traffic, and data traffic to be transmitted by using the second access type accounts for 30% of the total traffic. The switching rule is used to indicate that if the first condition is met, data traffic is switched from the first access type to the second access type. The first condition includes one or more of the following: a transmission delay of data flows in the first access type being greater than a threshold, a total amount of data flows transmitted by using the first access type being greater than a threshold, or a packet error rate of transmission using the first access type being greater than a threshold.

In step S660, the AMF configures the ATSSS rule for the UE by using an NAS message.

In embodiments of this application, the terminal device may carry the information about the second access type by using the session establishment request, to notify the network device of an access type corresponding to the MA PDU session requested to be established, which is conducive to extending application scenarios of the conventional ATSSS technology from multi-access scenarios based on 3GPP access and non-3GPP access to multi-access scenarios based on different 3GPP access types.

In addition, the configured ATSSS rule may indicate the information about the two access types, and determine their corresponding splitting rule and/or splitting rule, so that the UE performs multi-access communication subsequently based on the first access type and the second access type.

It should be noted that the foregoing description is provided by using multi-access communication performed based on the 3GPP access type and non-3GPP access type as an example, and the embodiments of this application are not limited thereto. For details, reference may be made to related descriptions above of the first access type and the second access type.

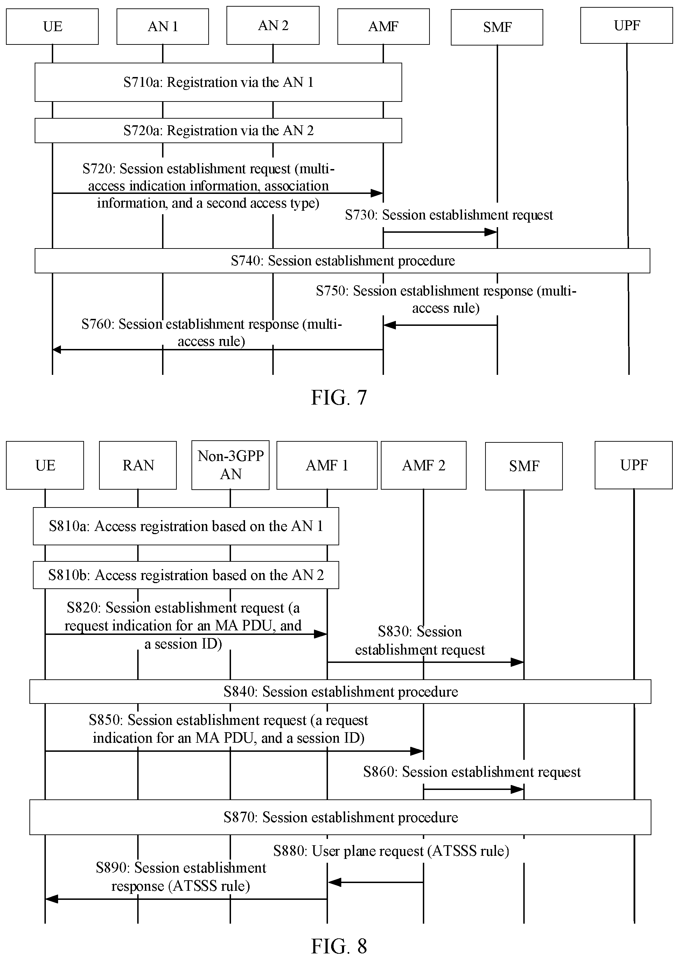

In the method illustrated in FIG. 7, the UE has completed registration via the first access type and the second access type, where the first access type and the second access type are used for multi-access communication of the UE, with the first access type corresponding to an AN 1 and the second access type corresponding to an AN 2. The method illustrated in FIG. 7 includes steps S710 to S760.

In steps S710a and S710b, the UE performs registration via both 3GPP access and non-3GPP access, where network elements for registration management are a same AMF.

In step S720, the UE transmits a session establishment request to the AMF by using the AN 1.

In some implementations, the session establishment request includes multi-access indication information (also referred to as "dual steer indication information") and association information.

The multi-access indication information described above is used to indicate that a session requested is used for multi-access communication.

The association information described above is used to indicate that the first access type and the second access type are associated with each other. The association information may include identity information of a terminal device and information about the second access type. The identity information of the terminal device may include one or more of a terminal device ID, a user subscription identifier corresponding to the terminal device, an IP address of the terminal device, or an association identifier. For descriptions of related information, reference may be made to the foregoing description. In addition, the information about the second access type is used to indicate a type of an access network corresponding to the second access type and an RAT type corresponding to the second access type.

In some other implementations, the association information described above may not carry the information about the second access type. In this case, after receiving the association information, the AMF may obtain the information about the second access type based on an identity of the terminal device and transmit the information to an SMF by carrying the information in a session request (reference is made to step S730).

In step S730, the AMF transmits a session establishment request to the SMF. The session establishment request includes the multi-access indication information, information about the first access type, and the information about the second access type.

In some implementations, the information about the second access type may include one or more of the following: a UE ID, a type of a second access network, an access network ID, or an RAT. The access network ID may be, for example, a PLMN ID.

In step S740, a session establishment procedure is performed. The procedure includes configuration of an N3 tunnel, configuration of a UPF, and the like.

In step S750, the SMF transmits a session establishment response to the AMF. The session establishment response includes a multi-access rule (also referred to as a "dual steer rule"). The multi-access rule includes the information about the first access type, the information about the second access type, a splitting rule corresponding to multi-access communication, and a switching rule corresponding to multi-access communication.

The information about the first access type may include a type of an access network corresponding to the first access type and an RAT type corresponding to the first access type. The information about the second access type may include a type of an access network corresponding to the second access type and an RAT type corresponding to the second access type. The splitting rule is used to indicate that data traffic to be transmitted by using the first access type accounts for 70% of total traffic, and data traffic to be transmitted by using the second access type accounts for 30% of the total traffic. The switching rule is used to indicate that if the first condition is met, data traffic is switched from the first access type to the second access type. The first condition includes one or more of the following: a transmission delay of data flows in the first access type being greater than a threshold, a total amount of data flows transmitted by using the first access type being greater than a threshold, or a packet error rate of transmission using the first access type being greater than a threshold.

In step S760, the AMF configures the multi-access rule for the UE by using an NAS message.

In embodiments of this application, the terminal device may carry the information about the second access type by using the session establishment request, to notify the network device of an associated access type (namely, the second access type) corresponding to the MA PDU session requested to be established, which is conducive to implementing multi-access communication in a plurality of scenarios.

It should be noted that the first access type and the second access type described above may be access types corresponding to a plurality of USIMs in a terminal device. For example, the first access type may be an access type corresponding to a USIM 1 among the plurality of USIMs, and the second access type may be an access type corresponding to a USIM 2 among the plurality of USIMs.

The method in embodiments of this application in the scenario where the UE is already in the dual-registration state is described above with reference to FIG. 6 and FIG. 7. The method in embodiments of this application in a single-access scenario in embodiments of this application is described below with reference to FIG. 8 and FIG. 9. It should be noted that in solutions illustrated in FIG. 8 and FIG. 9, an AMF 1 and an AMF 2 may be the same AMF or different AMFs. For ease of understanding, the following description is provided by using an example in which the AMF 1 and the AMF 2 are the same AMF.

In the method illustrated in FIG. 8, it is assumed that the UE performs multi-access communication based on the first access type and the second access type, where the first access type is an access type based on an AN 1, and the second access type is an access type based on an AN 2. The method illustrated in FIG. 8 includes steps S810 to S860.

In steps S810a and S810b, the UE performs registration via both the AN 1 and the AN 2, where network elements for registration management are a same AMF.

It should be understood that different PLMNs may be used for the first access type and the second access type described above. In addition, registration processes corresponding to the first access type and the second access type may not be executed simultaneously. For example, the UE may first perform registration via the first access type, and after establishing an MA PDU session by performing steps S810a to S840, the UE may then perform registration via the other access (namely, the second access type), trigger a session establishment request, and configure resources on the other access.

In step S820, the UE transmits a session establishment request to the AMF 1 via Access 1. The session establishment request includes a request indication for an MA PDU and a session identifier (session ID), which are used to request establishment of an MA PDU session.

In step S830, the AMF 1 transmits a session establishment request to an SMF. The session establishment request includes a request indication for an MA PDU, a type of an access network (3GPP or non-3GPP) currently used by the UE to transmit the session establishment request, and an access technology RAT (for example, NR, LTE, Wi-Fi, or the like) of the current access network.

In step S840, a session establishment procedure is performed. The procedure includes configuration of an N3 tunnel, configuration of a UPF, and the like.

In step S850, the UE transmits a session establishment request to the AMF 2 via Access 2. The session establishment request includes the session ID corresponding to the MA PDU session established via Access 1.

In step S860, the AMF 2 transmits a session establishment request to the SMF. The session establishment request includes a request indication for an MA PDU and an access network type (for example, an access network type corresponding to Access 2) for the MA PDU session, and an RAT of an access network corresponding to Access 2.

In some implementations, the session establishment request described above may be a session modification request.

In step S870, a session establishment and configuration procedure is performed to configure user plane resources and the like corresponding to Access 2.

In step S880, the AMF 2 transmits a user plane request to the AMF 1. The user plane request includes an ATSSS rule.

In some implementations, the session establishment response includes the ATSSS rule. The ATSSS rule includes information about the first access type, information about the second access type, a splitting rule corresponding to multi-access communication, and a switching rule corresponding to multi-access communication.

The information about the first access type may include a type of an access network corresponding to the first access type and an RAT type corresponding to the first access type. The information about the second access type may include a type of an access network corresponding to the second access type and an RAT type corresponding to the second access type. The splitting rule is used to indicate that data traffic to be transmitted by using the first access type accounts for 70% of total traffic, and data traffic to be transmitted by using the second access type accounts for 30% of the total traffic. The switching rule is used to indicate that if the first condition is met, data traffic is switched from the first access type to the second access type. The first condition includes one or more of the following: a transmission delay of data flows in the first access type being greater than a threshold, a total amount of data flows transmitted by using the first access type being greater than a threshold, or a packet error rate of transmission using the first access type being greater than a threshold.

In step S890, the AMF 1 transmits a session establishment response to the UE. The session establishment response carries the ATSSS rule.

In the method illustrated in FIG. 9, it is assumed that the UE performs multi-access communication based on the first access type and the second access type, where the first access type is an access type based on an AN 1, and the second access type is an access type based on an AN 2. The method illustrated in FIG. 9 includes steps S910 to S960.

In steps S910a and S910b, the UE performs registration via both the AN 1 and the AN 2, where network elements for registration management are a same AMF.

It should be understood that different PLMNs may be used for the first access type and the second access type described above. In addition, registration processes corresponding to the first access type and the second access type may not be executed simultaneously. For example, the UE may first perform registration via the first access type, and after establishing an MA PDU session by performing steps S910a to S940, the UE may then perform registration via the other access (namely, the second access type), trigger a session establishment request, and configure resources on the other access.

In step S920, the UE transmits a session establishment request to the AMF 1 via Access 1. The session establishment request includes a session identifier (session ID), which is used to request establishment of a session. Optionally, the session establishment request may include multi-access indication information (also referred to as "dual steer indication information").

In step S930, the AMF 1 transmits a session establishment request to an SMF. The session establishment request includes a request indication for an MA PDU, a type of an access network (3GPP or non-3GPP) currently used by the UE to transmit the session establishment request, and an access technology RAT (for example, NR, LTE, Wi-Fi, or the like) of the current access network.

In step S940, a session establishment procedure is performed. The procedure includes configuration of an N3 tunnel, configuration of a UPF, and the like.

In step S950, the UE transmits a session establishment request to the AMF 2 via Access 2. The session establishment request includes multi-access indication information and association information.

In some implementations, the association information may include identity information of a terminal device and information about the first access type. The identity information of the terminal device may include one or more of a terminal device ID, a user subscription identifier corresponding to the terminal device, an IP address of the terminal device, or an association identifier. For descriptions of related information, reference may be made to the foregoing description. The information about the first access type may include one or more of the following: a type of an access network corresponding to the first access type, an access network ID, an RAT, a PDU session ID corresponding to the first access type, or an IP address of the UE.

In embodiments of this application, the association information may be a combination of the information described above. For example, the association information may be a first UE ID and a corresponding PDU session identifier ID, where the first UE ID may be a UE ID corresponding to the first access type. For another example, the association information may be an IP address of a first UE, where the IP address of the first UE may be an IP address of a UE corresponding to the first access type.

Then, the AMF may transmit the information described above to the SMF, and the SMF may associate a session of the current second access type with a session of the first access type represented by the association information described above.

In some other implementations, the association information may further include one or more of the following: a first UE ID corresponding to the first access type, an association ID, or a user subscription ID. Correspondingly, the AMF determines, based on the association information, the first UE ID corresponding to the first access type and the session of the first access type, and transmits information corresponding to the session, such as the first UE ID, a PDU session ID, and the like, to the SMF. Accordingly, the SMF may associate the session of the current second access type with the session of the first access type represented by the information described above.

In step S960, the AMF 2 transmits a session establishment request to the SMF. The session establishment request includes multi-access indication information, association information, an access network type corresponding to Access 2, and an RAT of an access network corresponding to Access 2.

In some implementations, the session establishment request described above may be a session modification request.

In step S970, a session establishment and configuration procedure is performed to configure user plane resources and the like corresponding to Access 2.

In step S980, the AMF 2 transmits a session establishment response to the AMF 1. The session establishment response includes a multi-access rule.

In some implementations, the session establishment response includes the multi-access rule. The multi-access rule includes information about the first access type, information about the second access type, a splitting rule corresponding to multi-access communication, and a switching rule corresponding to multi-access communication.

The information about the first access type may include a type of an access network corresponding to the first access type and an RAT type corresponding to the first access type. The information about the second access type may include a type of an access network corresponding to the second access type and an RAT type corresponding to the second access type. The splitting rule is used to indicate that data traffic to be transmitted by using the first access type accounts for 70% of total traffic, and data traffic to be transmitted by using the second access type accounts for 30% of the total traffic. The switching rule is used to indicate that if the first condition is met, data traffic is switched from the first access type to the second access type. The first condition includes one or more of the following: a transmission delay of data flows in the first access type being greater than a threshold, a total amount of data flows transmitted by using the first access type being greater than a threshold, or a packet error rate of transmission using the first access type being greater than a threshold.

In step S990, the AMF 1 transmits a session establishment response to the UE. The session establishment response carries the multi-access rule.

The method embodiments of this application are described above in detail with reference to FIG. 1 to FIG. 9. Apparatus embodiments of this application are described below in detail with reference to FIG. 10 to FIG. 13. It should be understood that the descriptions of the method embodiments correspond to descriptions of the apparatus embodiments, and therefore, for parts that are not described in detail, reference may be made to the foregoing method embodiments.

FIG. 10 is a schematic diagram of a terminal device according to an embodiment of this application. The terminal device 1000 shown in FIG. 10 includes a transmitting unit 1010.

The transmitting unit 1010 is configured to transmit first information to a first core network device, where the first information is used to determine that a first access type and a second access type are used for multi-access communication of the terminal device.

In some implementations, the first information carries one or more of the following: identity information of the terminal device; information about the first access type; information about the second access type; or information for indicating that the first access type and the second access type are associated with each other.

In some implementations, the identity information of the terminal device includes one or more of the following: an IP address of the terminal device; a user subscription identifier corresponding to the terminal device; or an association identifier of the terminal device, where the association identifier is used to determine that the first access type and the second access type are associated with each other.

In some implementations, the first information is carried in a first request, and the first request is used to request establishment or modification of a first session.

In some implementations, the first information carries a first indication, and the first indication is used to indicate that the first session is used for the multi-access communication.

In some implementations, the first information carries a session identifier of a second session, and the second session corresponds to the second access type.

In some implementations, the terminal device further includes: in response to transmitting the first information, a receiving unit, configured to receive second information, where the second information is used to indicate a splitting rule corresponding to the multi-access communication, and/or a switching rule corresponding to the multi-access communication, where the splitting rule is used to indicate a method for traffic splitting between the first access type and the second access type, and the switching rule is used to indicate a timing for traffic switching between the first access type and the second access type.

In some implementations, the second information further includes information about the first access type, and/or information about the second access type.

In some implementations, the second information is carried in a response message for a first request, and the first request is used to request establishment or modification of a first session.

In some implementations, the information about the first access type includes one or more of the following: a type of an access network corresponding to the first access type; a terminal device identity corresponding to the first access type; or an RAT type corresponding to the first access type.

In some implementations, the information about the second access type includes one or more of the following: a type of an access network corresponding to the second access type; a terminal device identity corresponding to the second access type; or an RAT type corresponding to the second access type.

In some implementations, the first core network device is an AMF.

FIG. 11 is a schematic diagram of a core network device according to an embodiment of this application. The core network device 1100 shown in FIG. 11 is a first core network device. The core network device 1100 includes a receiving unit 1110.

The receiving unit is configured to receive first information transmitted by a terminal device, where the first information is used to determine that a first access type and a second access type are used for multi-access communication of the terminal device.

In some implementations, the first information carries one or more of the following: identity information of the terminal device; information about the first access type; information about the second access type; or information for indicating that the first access type and the second access type are associated with each other.

In some implementations, the identity information of the terminal device includes one or more of the following: an IP address of the terminal device; a user subscription identifier corresponding to the terminal device; or an association identifier of the terminal device, where the association identifier is used to determine that the first access type and the second access type are associated with each other.

In some implementations, the first information is carried in a first request, and the first request is used to request establishment or modification of a first session.

In some implementations, the first information carries a first indication, and the first indication is used to indicate that the first session is used for the multi-access communication.

In some implementations, the first information carries a session identifier of a second session, and the second session corresponds to the second access type.

In some implementations, the core network device further includes: a first transmitting unit, configured to transmit third information to a second core network device, where the third information is determined based on the first information, and the third information is used to indicate that the first access type and the second access type are used for multi-access communication of the terminal device.

In some implementations, in a case that information about the first access type that is carried in the first information includes a terminal device identity corresponding to the first access type, the core network device further includes: a processing unit, configured to determine, based on the terminal device identity corresponding to the first access type, type information corresponding to the first access type, where the type information includes a type of an access network and/or an RAT type, where the first transmitting unit is configured to transmit the third information to the second core network device, and the third information carries the type information corresponding to the first access type.

In some implementations, the receiving unit is configured to receive response information that is for the third information and transmitted by the second core network device, where the response information for the third information is used to indicate a splitting rule corresponding to the multi-access communication, and/or a switching rule corresponding to the multi-access communication, where the splitting rule is used to indicate a method for traffic splitting between the first access type and the second access type, and the switching rule is used to indicate a timing for traffic switching between the first access type and the second access type.

In some implementations, the response information for the third information further includes information about the first access type, and/or information about the second access type.

In some implementations, the first transmitting unit is configured to transmit second information to the terminal device, where the second information is determined based on the response information for the third information.

In some implementations, the information about the first access type includes one or more of the following: a type of an access network corresponding to the first access type; a terminal device identity corresponding to the first access type; or an RAT type corresponding to the first access type.

In some implementations, the information about the second access type includes one or more of the following: a type of an access network corresponding to the second access type; a terminal device identity corresponding to the second access type; or an RAT type corresponding to the second access type.

In some implementations, the first core network device is an AMF.

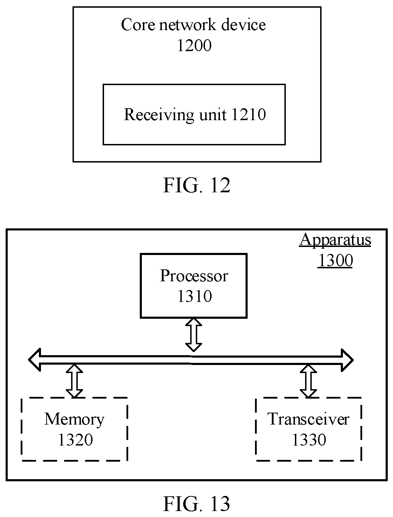

FIG. 12 is a schematic diagram of a core network device according to an embodiment of this application. The core network device 1200 shown in FIG. 12 is a second core network device. The core network device 1200 includes a receiving unit 1210.

The receiving unit 1210 is configured to receive third information transmitted by a first core network device, where the third information is used to determine that a first access type and a second access type are used for multi-access communication of a terminal device.

In some implementations, the third information carries one or more of the following: identity information of the terminal device; information about the first access type; information about the second access type; or information for indicating that the first access type and the second access type are associated with each other.

In some implementations, the identity information of the terminal device includes one or more of the following: an IP address of the terminal device; a user subscription identifier corresponding to the terminal device; or an association identifier of the terminal device, where the association identifier is used to determine that the first access type and the second access type are associated with each other.

In some implementations, the third information is carried in a first request, and the first request is used to request establishment or modification of a first session.

In some implementations, the third information carries a first indication, and the first indication is used to indicate that the first session is used for the multi-access communication.

In some implementations, the third information carries a session identifier of a second session, and the second session corresponds to the second access type.

In some implementations, the core network device further includes: a transmitting unit, configured to transmit response information for the third information to the first core network device, where the response information for the third information is used to indicate a splitting rule corresponding to the multi-access communication, and/or a switching rule corresponding to the multi-access communication, where the splitting rule is used to indicate a method for traffic splitting between the first access type and the second access type, and the switching rule is used to indicate a timing for traffic switching between the first access type and the second access type.

In some implementations, the response information for the third information further includes information about the first access type, and/or information about the second access type.

In some implementations, the information about the first access type includes one or more of the following: a type of an access network corresponding to the first access type; a terminal device identity corresponding to the first access type; or an RAT type corresponding to the first access type.

In some implementations, the information about the second access type includes one or more of the following: a type of an access network corresponding to the second access type; a terminal device identity corresponding to the second access type; or an RAT type corresponding to the second access type.

In some implementations, the first core network device is an AMF, and the second core network device is an SMF.

FIG. 13 is a schematic diagram of a structure of a communications apparatus according to an embodiment of this application. Dashed lines in FIG. 13 indicate that a unit or module is optional. The apparatus 1300 may be configured to implement the methods described in the foregoing method embodiments. The apparatus 1300 may be a chip, a terminal device, or a network device.

The apparatus 1300 may include one or more processors 1310. The processor 1310 may support the apparatus 1300 in implementing the methods described in the foregoing method embodiments. The processor 1310 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 1300 may further include one or more memories 1320. The memory 1320 stores a program, where the program may be executed by the processor 1310, to cause the processor 1310 to execute the methods described in the foregoing method embodiments. The memory 1320 may be separate from the processor 1310 or may be integrated into the processor 1310.

The apparatus 1300 may further include a transceiver 1330. The processor 1310 may communicate with another device or chip by using the transceiver 1330. For example, the processor 1310 may transmit data to and receive data from another device or chip through the transceiver 1330.

An embodiment of this application further provides a computer-readable storage medium for storing a program. The computer-readable storage medium may be applied to a terminal or a network device provided in embodiments of this application, and the program causes a computer to execute the methods executed by the terminal or the network device in various embodiments of this application.

An embodiment of this application further provides a computer program product. The computer program product includes a program. The computer program product may be applied to a terminal or a network device provided in embodiments of this application, and the program causes a computer to execute the methods executed by the terminal or the network device in various embodiments of this application.

An embodiment of this application further provides a computer program. The computer program may be applied to a terminal or a network device provided in embodiments of this application, and the computer program causes a computer to execute the methods executed by the terminal or the network device in various embodiments of this application.

It should be understood that, the terms used in this application are used only to illustrate specific embodiments of this application, but are not intended to limit this application. In the specification, claims, and accompanying drawings of this application, the terms "first", "second", and so on are intended to distinguish between different objects but do not indicate a particular order. In addition, the terms "include" and "have" and any variations thereof are intended to cover a non-exclusive inclusion.

In embodiments of this application, "indication" mentioned herein may refer to a direct indication, or may refer to an indirect indication, or may mean that there is an association relationship. For example, if A indicates B, it may mean that A directly indicates B, for example, B may be obtained from A. Alternatively, it may mean that A indicates B indirectly, for example, A indicates C, and B may be obtained from C. Alternatively, it may mean that there is an association relationship between A and B.

In embodiments of this application, "B corresponding to A" means that B is associated with A, and B may be determined based on A. However, it should be further understood that, determining B based on A does not mean determining B based only on A, but instead, B may be determined based on A and/or other information.

In embodiments of this application, the term "correspond" may mean that there is a direct or indirect correspondence between the two, or may mean that there is an association relationship between the two, or may mean that there is a relationship such as indicating and being indicated, or configuring and being configured.

In embodiments of this application, "predefining" or "pre-configuring" may be implemented by pre-storing corresponding code, tables, or other forms that may be used to indicate related information in devices (for example, including a terminal device and a network device), and a specific implementation thereof is not limited in this application. For example, being predefined may refer to being defined in a protocol.

In embodiments of this application, the "protocol" may refer to a standard protocol in the communications field, and may include, for example, an LTE protocol, an NR protocol, and a related protocol applied to a future communications system, which is not limited in this application.

In embodiments of this application, the term "and/or" describes merely an association relationship between associated objects, and represents that there may be three relationships. For example, A and/or B may represent three cases: only A exists, both A and B exist, and only B exists. In addition, the character "/" in this specification generally indicates an "or" relationship between the associated objects.

In embodiments of this application, sequence numbers of the foregoing processes do not mean execution orders. The execution orders of the processes should be determined based on functions and internal logic of the processes, and should not be construed as any limitation on the implementation processes of embodiments of this application.

In several embodiments provided in this application, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented as indirect couplings or communication connections through some interfaces, apparatus or units, and may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected according to actual needs to achieve the objective of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, and a digital subscriber line (digital subscriber line, DSL)) manner or a wireless (for example, infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid state disk, SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A wireless communication method, comprising:
transmitting, by a terminal device, first information to a first core network device, wherein the first information is used to determine that a first access type and a second access type are used for multi-access communication of the terminal device.

2. The method according to claim 1, wherein the first information carries one or more of following:
identity information of the terminal device;
information about the first access type;
information about the second access type; or
information for indicating that the first access type and the second access type are associated with each other.

3. The method according to claim 2, wherein the identity information of the terminal device comprises one or more of following:
an IP address of the terminal device;
a user subscription identifier corresponding to the terminal device; or
an association identifier of the terminal device, wherein the association identifier is used to determine that the first access type and the second access type are associated with each other.

4. The method according to any one of claims 1 to 3, wherein the first information is carried in a first request, and the first request is used to request establishment or modification of a first session.

5. The method according to claim 4, wherein the first information carries a first indication, and the first indication is used to indicate that the first session is used for the multi-access communication.

6. The method according to any one of claims 1 to 5, wherein the first information carries a session identifier of a second session, and the second session corresponds to the second access type.

7. The method according to any one of claims 1 to 6, wherein the method further comprises:
in response to transmitting the first information, receiving, by the terminal device, second information, wherein the second information is used to indicate a splitting rule corresponding to the multi-access communication, and/or a switching rule corresponding to the multi-access communication,
wherein the splitting rule is used to indicate a method for traffic splitting between the first access type and the second access type, and the switching rule is used to indicate a timing for traffic switching between the first access type and the second access type.

8. The method according to claim 7, wherein the second information further comprises information about the first access type, and/or information about the second access type.

9. The method according to claim 8, wherein the second information is carried in a response message for a first request, and the first request is used to request establishment or modification of a first session.

10. The method according to claim 2 or 8, wherein the information about the first access type comprises one or more of following:
a type of an access network corresponding to the first access type;
a terminal device identity corresponding to the first access type; or
an RAT type corresponding to the first access type.

11. The method according to claim 2 or 8, wherein the information about the second access type comprises one or more of following:
a type of an access network corresponding to the second access type;
a terminal device identity corresponding to the second access type; or
an RAT type corresponding to the second access type.

12. The method according to any one of claims 1 to 11, wherein the first core network device is an AMF.

13. A wireless communication method, comprising:
receiving, by a first core network device, first information transmitted by a terminal device, wherein the first information is used to determine that a first access type and a second access type are used for multi-access communication of the terminal device.

14. The method according to claim 13, wherein the first information carries one or more of following:
identity information of the terminal device;
information about the first access type;
information about the second access type; or
information for indicating that the first access type and the second access type are associated with each other.

15. The method according to claim 13, wherein identity information of the terminal device comprises one or more of following:
an IP address of the terminal device;
a user subscription identifier corresponding to the terminal device; or
an association identifier of the terminal device, wherein the association identifier is used to determine that the first access type and the second access type are associated with each other.

16. The method according to any one of claims 12 to 15, wherein the first information is carried in a first request, and the first request is used to request establishment or modification of a first session.

17. The method according to claim 16, wherein the first information carries a first indication, and the first indication is used to indicate that the first session is used for the multi-access communication.

18. The method according to any one of claims 12 to 17, wherein the first information carries a session identifier of a second session, and the second session corresponds to the second access type.

19. The method according to any one of claims 12 to 18, wherein the method further comprises:
transmitting, by the first core network device, third information to a second core network device, wherein the third information is determined based on the first information, and the third information is used to indicate that the first access type and the second access type are used for multi-access communication of the terminal device.

20. The method according to claim 19, wherein in a case that information about the first access type that is carried in the first information comprises a terminal device identity corresponding to the first access type, the method further comprises:
determining, by the first core network device based on the terminal device identity corresponding to the first access type, type information corresponding to the first access type, wherein the type information comprises a type of an access network and/or an RAT type; and
the transmitting, by the first core network device, the third information to the second core network device comprises:
transmitting, by the first core network device, the third information to the second core network device, wherein the third information carries the type information corresponding to the first access type.

21. The method according to claim 19 or 20, wherein the method further comprises:
receiving, by the first core network device, response information that is for the third information and transmitted by the second core network device, wherein the response information for the third information is used to indicate a splitting rule corresponding to the multi-access communication, and/or a switching rule corresponding to the multi-access communication,
wherein the splitting rule is used to indicate a method for traffic splitting between the first access type and the second access type, and the switching rule is used to indicate a timing for traffic switching between the first access type and the second access type.

22. The method according to claim 21, wherein the response information for the third information further comprises information about the first access type, and/or information about the second access type.

23. The method according to claim 21 or 22, wherein the method further comprises:
transmitting, by the first core network device, second information to the terminal device, wherein the second information is determined based on the response information for the third information.

24. The method according to claim 14 or 20, wherein the information about the first access type comprises one or more of following:
a type of an access network corresponding to the first access type;
a terminal device identity corresponding to the first access type; or
an RAT type corresponding to the first access type.

25. The method according to claim 14 or 20, wherein the information about the second access type comprises one or more of following:
a type of an access network corresponding to the second access type;
a terminal device identity corresponding to the second access type; or
an RAT type corresponding to the second access type.

26. The method according to any one of claims 13 to 25, wherein the first core network device is an AMF.

27. A wireless communication method, comprising:
receiving, by a second core network device, third information transmitted by a first core network device, wherein the third information is used to determine that a first access type and a second access type are used for multi-access communication of a terminal device.

28. The method according to claim 27, wherein the third information carries one or more of following:
identity information of the terminal device;
information about the first access type;
information about the second access type; or
information for indicating that the first access type and the second access type are associated with each other.

29. The method according to claim 28, wherein the identity information of the terminal device comprises one or more of following:
an IP address of the terminal device;
a user subscription identifier corresponding to the terminal device; or
an association identifier of the terminal device, wherein the association identifier is used to determine that the first access type and the second access type are associated with each other.

30. The method according to any one of claims 27 to 29, wherein the third information is carried in a first request, and the first request is used to request establishment or modification of a first session.

31. The method according to claim 30, wherein the third information carries a first indication, and the first indication is used to indicate that the first session is used for the multi-access communication.

32. The method according to any one of claims 27 to 31, wherein the third information carries a session identifier of a second session, and the second session corresponds to the second access type.

33. The method according to any one of claims 27 to 32, wherein the method further comprises:
transmitting, by the second core network device, response information for the third information to the first core network device, wherein the response information for the third information is used to indicate a splitting rule corresponding to the multi-access communication, and/or a switching rule corresponding to the multi-access communication,
wherein the splitting rule is used to indicate a method for traffic splitting between the first access type and the second access type, and the switching rule is used to indicate a timing for traffic switching between the first access type and the second access type.

34. The method according to claim 33, wherein the response information for the third information further comprises information about the first access type, and/or information about the second access type.

35. The method according to claim 28 or 34, wherein the information about the first access type comprises one or more of following:
a type of an access network corresponding to the first access type;
a terminal device identity corresponding to the first access type; or
an RAT type corresponding to the first access type.

36. The method according to claim 28 or 34, wherein the information about the second access type comprises one or more of following:
a type of an access network corresponding to the second access type;
a terminal device identity corresponding to the second access type; or
an RAT type corresponding to the second access type.

37. The method according to any one of claims 27 to 36, wherein the first core network device is an AMF, and the second core network device is an SMF.

38. A terminal device, comprising:
a transmitting unit, configured to transmit first information to a first core network device, wherein the first information is used to determine that a first access type and a second access type are used for multi-access communication of the terminal device.

39. The terminal device according to claim 38, wherein the first information carries one or more of following:
identity information of the terminal device;
information about the first access type;
information about the second access type; or
information for indicating that the first access type and the second access type are associated with each other.

40. The terminal device according to claim 39, wherein the identity information of the terminal device comprises one or more of following:
an IP address of the terminal device;
a user subscription identifier corresponding to the terminal device; or
an association identifier of the terminal device, wherein the association identifier is used to determine that the first access type and the second access type are associated with each other.

41. The terminal device according to any one of claims 38 to 40, wherein the first information is carried in a first request, and the first request is used to request establishment or modification of a first session.

42. The terminal device according to claim 41, wherein the first information carries a first indication, and the first indication is used to indicate that the first session is used for the multi-access communication.

43. The terminal device according to any one of claims 38 to 42, wherein the first information carries a session identifier of a second session, and the second session corresponds to the second access type.

44. The terminal device according to any one of claims 38 to 43, wherein the terminal device further comprises:
in response to transmitting the first information, a receiving unit, configured to receive second information, wherein the second information is used to indicate a splitting rule corresponding to the multi-access communication, and/or a switching rule corresponding to the multi-access communication,
wherein the splitting rule is used to indicate a method for traffic splitting between the first access type and the second access type, and the switching rule is used to indicate a timing for traffic switching between the first access type and the second access type.

45. The terminal device according to claim 44, wherein the second information further comprises information about the first access type, and/or information about the second access type.

46. The terminal device according to claim 45, wherein the second information is carried in a response message for a first request, and the first request is used to request establishment or modification of a first session.

47. The terminal device according to claim 39 or 45, wherein the information about the first access type comprises one or more of following:
a type of an access network corresponding to the first access type;
a terminal device identity corresponding to the first access type; or
an RAT type corresponding to the first access type.

48. The terminal device according to claim 39 or 45, wherein the information about the second access type comprises one or more of following:
a type of an access network corresponding to the second access type;
a terminal device identity corresponding to the second access type; or
an RAT type corresponding to the second access type.

49. The terminal device according to any one of claims 38 to 48, wherein the first core network device is an AMF.

50. A core network device, wherein the core network device is a first core network device, and comprises:
a receiving unit, configured to receive first information transmitted by a terminal device, wherein the first information is used to determine that a first access type and a second access type are used for multi-access communication of the terminal device.

51. The core network device according to claim 50, wherein the first information carries one or more of following:
identity information of the terminal device;
information about the first access type;
information about the second access type; or
information for indicating that the first access type and the second access type are associated with each other.

52. The core network device according to claim 51, wherein the identity information of the terminal device comprises one or more of following:
an IP address of the terminal device;
a user subscription identifier corresponding to the terminal device; or
an association identifier of the terminal device, wherein the association identifier is used to determine that the first access type and the second access type are associated with each other.

53. The core network device according to any one of claims 50 to 52, wherein the first information is carried in a first request, and the first request is used to request establishment or modification of a first session.

54. The core network device according to claim 53, wherein the first information carries a first indication, and the first indication is used to indicate that the first session is used for the multi-access communication.

55. The core network device according to any one of claims 50 to 54, wherein the first information carries a session identifier of a second session, and the second session corresponds to the second access type.

56. The core network device according to any one of claims 50 to 55, wherein the core network device further comprises:
a first transmitting unit, configured to transmit third information to a second core network device, wherein the third information is determined based on the first information, and the third information is used to indicate that the first access type and the second access type are used for multi-access communication of the terminal device.

57. The core network device according to claim 56, wherein in a case that information about the first access type that is carried in the first information comprises a terminal device identity corresponding to the first access type, the core network device further comprises:
a processing unit, configured to determine, based on the terminal device identity corresponding to the first access type, type information corresponding to the first access type, wherein the type information comprises a type of an access network and/or an RAT type, wherein
the first transmitting unit is configured to transmit the third information to the second core network device, and the third information carries the type information corresponding to the first access type.

58. The core network device according to claim 56 or 57, wherein the receiving unit is configured to:
receive response information that is for the third information and transmitted by the second core network device, wherein the response information for the third information is used to indicate a splitting rule corresponding to the multi-access communication, and/or a switching rule corresponding to the multi-access communication,
wherein the splitting rule is used to indicate a method for traffic splitting between the first access type and the second access type, and the switching rule is used to indicate a timing for traffic switching between the first access type and the second access type.

59. The core network device according to claim 58, wherein the response information for the third information further comprises information about the first access type, and/or information about the second access type.

60. The core network device according to claim 58 or 59, wherein the first transmitting unit is configured to transmit second information to the terminal device, wherein the second information is determined based on the response information for the third information.

61. The core network device according to claim 51 or 59, wherein the information about the first access type comprises one or more of following:
a type of an access network corresponding to the first access type;
a terminal device identity corresponding to the first access type; or
an RAT type corresponding to the first access type.

62. The core network device according to claim 51 or 59, wherein the information about the second access type comprises one or more of following:
a type of an access network corresponding to the second access type;
a terminal device identity corresponding to the second access type; or
an RAT type corresponding to the second access type.

63. The core network device according to any one of claims 50 to 62, wherein the first core network device is an AMF.

64. A core network device, wherein the core network device is a second core network device, and comprises:
a receiving unit, configured to receive third information transmitted by a first core network device, wherein the third information is used to determine that a first access type and a second access type are used for multi-access communication of a terminal device.

65. The core network device according to claim 64, wherein the third information carries one or more of following:
identity information of the terminal device;
information about the first access type;
information about the second access type; or
information for indicating that the first access type and the second access type are associated with each other.

66. The core network device according to claim 65, wherein the identity information of the terminal device comprises one or more of following:
an IP address of the terminal device;
a user subscription identifier corresponding to the terminal device; or
an association identifier of the terminal device, wherein the association identifier is used to determine that the first access type and the second access type are associated with each other.

67. The core network device according to any one of claims 64 to 66, wherein the third information is carried in a first request, and the first request is used to request establishment or modification of a first session.

68. The core network device according to claim 67, wherein the third information carries a first indication, and the first indication is used to indicate that the first session is used for the multi-access communication.

69. The core network device according to any one of claims 64 to 68, wherein the third information carries a session identifier of a second session, and the second session corresponds to the second access type.

70. The core network device according to any one of claims 64 to 69, wherein the core network device further comprises:
a transmitting unit, configured to transmit response information for the third information to the first core network device, wherein the response information for the third information is used to indicate a splitting rule corresponding to the multi-access communication, and/or a switching rule corresponding to the multi-access communication,
wherein the splitting rule is used to indicate a method for traffic splitting between the first access type and the second access type, and the switching rule is used to indicate a timing for traffic switching between the first access type and the second access type.

71. The core network device according to claim 70, wherein the response information for the third information further comprises information about the first access type, and/or information about the second access type.

72. The core network device according to claim 65 or 71, wherein the information about the first access type comprises one or more of following:
a type of an access network corresponding to the first access type;
a terminal device identity corresponding to the first access type; or
an RAT type corresponding to the first access type.

73. The core network device according to claim 65 or 71, wherein the information about the second access type comprises one or more of following:
a type of an access network corresponding to the second access type;
a terminal device identity corresponding to the second access type; or
an RAT type corresponding to the second access type.

74. The core network device according to any one of claims 64 to 73, wherein the first core network device is an AMF, and the second core network device is an SMF.

75. A terminal device, comprising a transceiver, a memory, and a processor, wherein the memory is configured to store a program, and the processor is configured to invoke the program in the memory and control the transceiver to receive or transmit a signal, to cause the terminal device to execute the method according to any one of claims 1 to 12.

76. A core network device, comprising a transceiver, a memory, and a processor, wherein the memory is configured to store a program, and the processor is configured to invoke the program in the memory and control the transceiver to receive or transmit a signal, to cause the core network device to execute the method according to any one of claims 13 to 37.

77. An apparatus, comprising a processor configured to invoke a program from a memory, to cause the apparatus to execute the method according to any one of claims 1 to 37.

78. A chip, comprising a processor, configured to invoke a program from a memory to cause a device installed with the chip to execute the method according to any one of claims 1 to 37.

79. A computer-readable storage medium, wherein the computer-readable storage medium stores a program, and the program causes a computer to execute the method according to any one of claims 1 to 37.

80. A computer program product, comprising a program that causes a computer to execute the method according to any one of claims 1 to 37.

81. A computer program, wherein the computer program causes a computer to execute the method according to any one of claims 1 to 37.
